(19) Europäisches Patentamt
European Patent Office
Office européen des brevets

(11) **EP 1 802 410 B1**

(12) **EUROPÄISCHE PATENTSCHRIFT**

(45) Veröffentlichungstag und Bekanntmachung des Hinweises auf die Patenterteilung:
**04.11.2009 Patentblatt 2009/45**

(21) Anmeldenummer: **05777367.3**

(22) Anmeldetag: **12.08.2005**

(51) Int Cl.:
*B22D 13/02* (2006.01)     *C23C 24/08* (2006.01)
*B32B 15/01* (2006.01)     *C10G 9/20* (2006.01)
*B22F 3/12* (2006.01)     *B22F 5/10* (2006.01)
*B22F 7/08* (2006.01)     *F16L 9/18* (2006.01)
*F28F 1/40* (2006.01)     *F28F 19/06* (2006.01)

(86) Internationale Anmeldenummer:
**PCT/EP2005/008813**

(87) Internationale Veröffentlichungsnummer:
**WO 2006/018251 (23.02.2006 Gazette 2006/08)**

(54) **VERWENDUNG VON VERBUNDROHR**

USE OF COMPOSITE TUBE

UTILISATION DE TUBE COMPOSITE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.08.2004 DE 102004039356**

(43) Veröffentlichungstag der Anmeldung:
**04.07.2007 Patentblatt 2007/27**

(73) Patentinhaber: **Schmidt + Clemens GmbH + Co. KG**
**51779 Lindlar (DE)**

(72) Erfinder:
• **JAKOBI, Dietlinde**
**50733 Köln (DE)**
• **DÜSTER, Hans-Peter**
**51647 Gummersbach (DE)**
• **MARTURET, Carlos**
**31005 Pamplona (ES)**

(74) Vertreter: **Tilmann, Max Wilhelm et al**
**König Szynka Tilmann von Renesse Patentanwälte Partnerschaft**
**Lohengrinstrasse 11**
**40549 Düsseldorf (DE)**

(56) Entgegenhaltungen:
**EP-A- 0 980 729     GB-A- 969 796**
**US-A- 4 510 988     US-A- 4 746 554**
**US-A- 4 933 141     US-A1- 2002 034 463**

• **ASM INTERNATIONAL: "Metals Handbook, Ninth Edition, Volume 15, Casting" September 1998 (1998-09), ASM INTERNATIONAL , USA , XP002367081 ISBN: 0-87170-007-7 Seite 29, Spalte 1**
• **PATENT ABSTRACTS OF JAPAN Bd. 018, Nr. 200 (P-1724), 7. April 1994 (1994-04-07) & JP 06 004681 A (HITACHI INF SYST LTD), 14. Januar 1994 (1994-01-14)**
• **PATENT ABSTRACTS OF JAPAN Bd. 015, Nr. 013 (M-1069), 11. Januar 1991 (1991-01-11) & JP 02 263903 A (KOBE STEEL LTD), 26. Oktober 1990 (1990-10-26)**

EP 1 802 410 B1

**Beschreibung**

Die Erfindung betrifft eine Verwendung für ein Verbundrohr.

Für die Hochtemperaturpyrolyse von Kohlenwasserstoffen (Erdölderivate) haben sich Röhrenöfen bewährt, bei denen ein Kohlenwasserstoff/Wasserdampf-Gemisch bei Temperaturen über 750 °C durch Reihen aus einzelnen oder mäanderförmig angeordneten Rohren (Crackrohrschlangen) aus hitzebeständiger Chrom-Nickel-Stahllegierung mit hoher Oxidations- beziehungsweise Zunderbeständigkeit in Rauchgasen und hoher Aufkohlungsbeständigkeit geführt wird. Die Rohrschlangen bestehen beispielsweise aus vertikal verlaufenden geraden Rohrabschnitten, die über U-förmige Rohrbogen miteinander verbunden sind; sie werden üblicherweise mit Hilfe von Seitenwand- und teilweise auch mit Hilfe von Bodenbrennern beheizt und besitzen daher eine den Brennern zugekehrte sogenannte Sonnenseite sowie eine dem gegenüber um 90° versetzte, das heißt in Richtung der Rohrreihen verlaufende sogenannte Schattenseite. Dabei liegen die mittleren Rohrwandtemperaturen (TMT) teilweise über 1000 °C.

Die Lebensdauer der Crackrohre hängt sehr wesentlich von ihrer Aufkohlungsbeständigkeit und diese wiederum von der Verkokungsgeschwindigkeit ab. Maßgeblich für die Verkokungsgeschwindigkeit, das heißt für das Anwachsen einer Schicht von Kohlenstoffablagerungen (Pyrolysekoks) an der Rohrinnenwand sind neben der Art der eingesetzten Kohlenwasserstoffe die Spaltgastemperatur im Bereich der Innenwand und die sogenannte Crackschärfe, hinter der sich der Einfluß des Systemdrucks und der Verweilzeit im Rohrsystem auf die Äthylenausbeute verbirgt. Die Spaltschärfe wird anhand der mittleren Austrittstemperatur der Spaltgase (z. B. 850 °C) eingestellt. Je höher die Gastemperatur in der Nähe der Rohr-Innenwand über dieser Temperatur liegt, um so stärker wächst die Schicht des Pyrolysekokses, deren isolierende Wirkung die Rohrwandtemperatur weiter steigen läßt. Obgleich die als Rohrwerkstoff zur Verwendung kommenden Chrom-Nickel-Stahllegierungen mit 0,4 % Kohlenstoff über 25 % Chrom und über 20 % Nickel, beispielsweise 35 % Chrom, 45 % Nickel und gegebenenfalls 1 % Niob eine hohe Aufkohlungsbeständigkeit besitzen, diffundiert der Kohlenstoff an Fehlstellen der Oxidschicht in die Rohrwandung und führt dort zu einer erheblichen Aufkohlung, die bis zu Kohlenstoffgehalten von 1 % bis 3% in Wandtiefen von 0,5 bis 3 mm gehen kann. Verbunden damit ist eine erhebliche Versprödung des Rohrwerkstoffs mit der Gefahr einer Rißbildung bei thermischer Wechselbelastung insbesondere beim An- und Abfahren des Ofens.

Um die Kohlenstoffablagerungen (Verkokung) an der Rohrinnenwand abzubauen, ist es erforderlich, den Crackbetrieb von Zeit zu Zeit zu unterbrechen und den Pyrolysekoks mit Hilfe eines Dampf/Luft-Gemischs zu verbrennen. Dies erfordert eine Betriebsunterbrechung von bis zu 36 Stunden und beeinträchtigt daher erheblich die Wirtschaftlichkeit des Verfahrens.

Aus der britischen Patentschrift 969 796 ist die Verwendung von Crackrohren mit Innenrippen bekannt. Solche Innenrippen ergeben zwar eine um viele Prozente, beispielsweise um 10 % größere Innenoberfläche und demzufolge einen besseren Wärmeübergang; sie sind aber auch mit dem Nachteil eines im Vergleich zu einem Glattrohr erheblich erhöhten Druckverlustes infolge Reibung an der vergrößerten Rohr-Innenoberfläche verbunden. Der höhere Druckverlust erfordert einen höheren Systemdruck und verschlechtert daher die Ausbeute. Hinzu kommt daß sich die bekannten Rohrwerkstoffe mit hohen Gehalten an Kohlenstoff und Chrom nicht mehr durch Kaltverformen, beispielsweise Kaltpressen profilieren lassen. Sie besitzen den Nachteil, daß sich ihre Verformbarkeit mit zunehmender Warmfestigkeit sowie Aufkohlungs- und Oxidationsbeständigkeit stark verringert. Dies hat dazu geführt, daß die im Hinblick auf die Äthylenausbeute erwünschten hohen Rohrwandtemperaturen von beispielsweise bis 1050 °C die Verwendung von Schleudergußrohren erfordern.

Beim Schleudergießen wird die geschmolzene Legierung in das Ende einer rohrförmigen Gießform gegossen, die sich mit einer so hohen Geschwindigkeit dreht, daß die geschmolzene Legierung eine Schicht von flüssiger Legierung an der Innenseite der Gießform bildet. Nachdem die Legierung erstarrt ist, wird die Drehung der Gießform gestoppt und das auf diese Weise geformte Rohr kann ausgestoßen werden. Das Rohr wird über seine Länge ausgebohrt, um den geforderten Innendurchmesser zu haben. Irgendwelche oxidische Verunreinigungen werden immer leichter sein als die Legierung und werden daher auf der Innenseite des Rohres "schwimmen" und sie werden daher durch das Bohren entfernt.

Da sich Schleudergußrohre jedoch nur mit zylindrischer Wandung herstellen lassen, bedarf es zur Herstellung eines Innen-Rippenrohres einer besonderen spanabhebenden oder elektrolytisch abtragenden Bearbeitung.

In dem europäischen Patent EP 0 980 729 B1 wird eine derartige elektrolytische Bearbeitung eines Schleudergußrohrs beschrieben. Hierzu wird der Rohrrohling in eine Halteeinrichtung eingebracht, die an ihren offenen Enden rundum abgedichtet wird. Die Abdichtung erlaubt einzig ein Ein- und Ausströmen eines Elektrolyts und den Durchgriff einer Elektrodenstange, an deren Ende eine Elektrode angebracht ist, die mittels der Elektrodenstange entlang der Innenseite des zu bearbeitenden Rohrs in Achsrichtung des Rohrs bewegt werden kann. Die Elektrode weist an ihrer Außenfläche eine Reihe von Kämmen und Tälern auf. Indem über elektrische Klemmen, die entlang dem Rohr beabstandet angeordnet sind, und über einen Stromanschlußblock am Ende der Elektrodenstange eine Spannungsdifferenz zwischen der Elektrode und dem Rohr angelegt wird, wird das Material der Innenseite des Rohrs elektrolytisch abgetragen. Das Rohrinnere erhält auf diese Weise ein Profil der geometischen Form der Außenfläche der Elektrode. Dieses Verfahren hat sich jedoch in der Durchführung als aufwendig erwiesen.

Die Herstellung eines Verbundrohrs mit einem ersten Teilrohr und einem zweiten Teilrohr, bei dem das eine Teilrohr in dem anderen Teilrohr angeordnet ist und das erste Teilrohr ein Schleudergussrohr ist, ist aus US 4,510,988 bekannt. Bei dem dort beschriebenen Verbundrohr wird das zweite Teilrohr durch Aufsprühen eines Pulvers auf das erste Teilrohr hergestellt. Das erste Teilrohr wird nach seiner Herstellung auf einem hohen Temperaturniveau gehalten, so dass das aufgesprühte Pulver durch die im ersten Teilrohr verbliebene Wärmeenergie geschmolzen wird. Durch die weitergehende Drehung des ersten Teilrohrs wird das Pulver und damit das herzustellende zweite Teilrohr gut auf der Innenseite des ersten Teilrohrs verteilt.

Die Herstellung von Verbundrohren im Schleuderguß, deren Teilrohre in separaten Bearbeitungsschritten hergestellt werden und metallurgisch miteinander verbunden sind, ist aus US 6,406,800 B1 bekannt. Dort wird ein Rohrbogen für Rohrleitungen zum Transport von Feststoffen beschrieben. Das als Ausgangsprodukt für das gebogene Rohr verwendete Verbundrohr wird im Schleuderguß hergestellt. Zunächst wird das das Außenrohr bildende Material im geschmolzenen Zustand in die Gießform gegossen, die sich mit einer hohen Geschwindigkeit dreht, so daß die geschmolzene Legierung eine Schicht von flüssiger Legierung an der Innenseite der Gießform bildet. Kurz bevor die Legierung vollständig erstarrt oder unmittelbar nach der vollständigen Erstarrung, wird die das Innenrohr bildende geschmolzene Legierung ebenfalls in die sich drehende Gießform gegossen, so daß die geschmolzene zweite Legierung eine Schicht von flüssiger Legierung an der Innenseite der nahezu erstarrten ersten Legierung bildet. In dem Übergangsbereich zwischen Außenrohr und Innenrohr mischen sich die beiden Materialien und erzeugen damit eine metallurgische Verbindung zwischen den beiden Rohren. Die in US 6,406,800 B1 beschriebenen Legierungen eignen sich nicht für den Einsatz in der Hochtemperaturpyrolyse. Ferner ist nachteilig, daß nur solche Legierungen für das Außen- und Innenrohr eingesetzt werden können, die schleudergießfähig sind.

JP 08109405 offenbart ein Verbundrohr.

Aus US 5,069,866 ist es ferner bekannt, ein Rohr mit einem Außenrohr und einem mit dem Außenrohr verbundenen Innenrohr durch isostatisches Heißpressen (HIP, hot isostatic pressing) aus zwei Pulvern herzustellen. Die dort beschriebenen austenitischen Stähle oder Nickellegierungen eignen sich jedoch ebenfalls nicht für den Einsatz in der Hochtemperaturpyrolyse.

Vor diesem Hintergrund liegt der Erfindung das Problem zugrunde, die Verwendung eines Rohres vorzuschlagen, das besonders gut an die speziellen, in besonderen Einsatzgebieten wie der Hydropyrolyse gestellten Anforderungen angepaßt ist.

Dieses Problem wird durch den Gegenstand des Hauptanspruchs gelöst, vorteilhafte Ausgestaltungen sind in den Unteransprüchen angegeben.

Die Erfindung geht von dem Grundgedanken aus, ein Verbundrohr wie in Anspruch 1 definiert auszubilden und zu verwenden. Hierdurch ist das erfindungsaemäße Rohr speziell an die in besonderen Einsatzgebieten, nämlich der Hydropyrolyse, gestellten Anforderungen angepaßt.

Durch das zweite Teilrohr können insbesondere die Korrosionseigenschaften, auch bei Temperaturen bis zu 1200 °C, die Verschleißbeständigkeit, das Aufkohlungs- und Verkokungsverhalten bei der Anwendung in Ethylen-Crakkern sowie die Wärmeübertragung von Schleudergußrohren verbessert werden.

Für den nicht erfindungsgemäßen Einsatz beim Fördern von stark korrosiven Medien, kann ein Schleudergußrohr aus einem korrosionsbeständigen Werkstoff mit beispielsweise begrenzten mechanischen Eigenschaften eingesetzt werden, während der Rest der Wandstärke aus einem preiswerteren Material mit guten mechanischen Eigenschaften hergestellt wird.

Der Einsatz eines Schleudergußrohrs eignet sich aufgrund seines homogenen Gefüges und des möglichen Einsatzes von Chrom-Nickelstählen für das thermische Spalten von Kohlenwasserstoffen besonders gut. Durch die Ausbildung des zweiten durch isostatisches Heißpressen aus einem Pulver erzeugten Teilrohrs können dem Schleudergußrohr jedoch weitere Eigenschaften gegeben werden, die durch es selbst nicht erreicht werden können. So kann das zweite Teilrohr aus Werkstoffen hergestellt werden, die einem Schleudergießprozeß nicht zugänglich sind, aber als Pulver erzeugt werden können. Ferner kann dem zweiten Teilrohr bei der Druckbehandlung des Pulvers eine Geometrie, beispielsweise ein Oberflächenprofil, gegeben werden. Derartige Geometrien lassen sich bei reinen Schleudergußrohren sonst nur mit aufwendigen Nachbearbeitungsschritten, beispielsweise einem spanabhebenden oder elektrolytisch abtragenden Nacharbeiten erzielen. Das erfindungsgemäße Verbundrohr kann jedoch auch eine glatte Oberfläche aufweisen. Hier treten dann die durch den Einsatz eines Pulvers möglich gemachten Vorteile der freieren Werkstoffwahl in den Vordergrund. Für die Verwendung des Schleudergußrohrs im Verbund kann unter gewissen Umständen auch auf das kostenintensive Nachbehandeln des Schleudergußrohrs, beispielsweise das Aufbohren, verzichtet werden.

Als Verbundrohr wird ein Rohr verstanden, daß auf seinen Querschnitt bezogen mindestens zwei Bereiche (Teilrohre) aufweist, die sich voneinander durch die Art der Herstellung unterscheiden.

Unter einer Druckbehandlung des Pulvers wird die Verdichtung des Pulvers mittels isostatischem Heißpressen (hot isostatic pressing, HIP) verstanden, bei dem in Kombination mit einem Erhitzen des Pulvers aus dem Pulver oder einem vorverdichteten Pulver ein zusammenhängender Festkörper erzeugt wird.

In einer bevorzugten Ausführungsform ist das erste Teilrohr in Radialrichtung des Verbundrohrs unmittelbar an das zweite Teilrohr angrenzend angeordnet und über eine seiner Oberflächen fest mit einer Oberfläche des zweiten Teilrohrs verbunden. Es können jedoch auch weitere Teilrohre, insbesondere weitere Schleudergußrohre oder weitere durch Druckbehandlung aus einem Pulver erzeugte Teilrohre vorgesehen sein. Hierdurch können verschiedene Lagen eines Verbundrohrs erzeugt werden, die für ihre Lage im Rohrquerschnitt bevorzugte Eigenschaften aufweisen.

In einer bevorzugten Ausführungsform weist das zweite Teilrohr ein Profil, insbesondere eine oder mehrere Innenrippen auf, wobei das Profil auch ein Außenprofil sein kann. Mit einem Profil können in dem erfindungsgemäßen Verbundrohr strömende Medien oder an dem Verbundrohr außen vorbei strömende Medien beeinflußt, beispielsweise verwirbelt werden. Die besonders bevorzugte Ausführungsform mit Innenrippen eignet sich gut zum Einsatz in einem Verfahren zum thermischen Spalten von Kohlenwasserstoffen in Anwesenheit von Dampf.

Abhängig von der Seite des Schleudergußrohres, der durch das zweite Teilrohr besondere Eigenschaften gegeben werden sollen (Außenseite/Innenseite), kann das Teilrohr in dem ersten Teilrohr oder das erste Teilrohr umschließend hergestellt werden.

Ein bevorzugtes Strömungsbild aus Kern- und Drallstömung in dem erfindungsgemäßen Verbundrohr mit Innenrippen läßt sich mit einem Verbundrohr erreichen, bei dem der Flankenwinkel der vorzugsweise von Rohranfang zu Rohrende durchgehenden Rippen, daß heißt das der Außenwinkel zwischen den Rippenflanken und dem Radius des Rohrs 16° bis 20°, vorzugs weise 17,5° bis 18,5° beträgt; er liegt damit über dem sogenannten Venturi-Winkel, das heißt dem Öffnungswinkel einer Venturidüse in Strömungsrichtung, der üblicherweise 15° nicht übersteigt. Ein derartiger Flankenwinkel gewährleistet insbesondere in Verbindung mit einer Rippensteigung von 20° bis 40°, vorzugsweise 22,5° bis 32,5°, daß sich in den Rippentälern nicht eine mehr oder weniger in sich geschlossene, hinter die Rippenflanken in die Rippentäler zurückkehrende Wirbelströmung ergibt, die in den Rippentälern zum Entstehen unerwünschter "Twisters", das heißt von geschlossenen Wirbelzöpfen führt. Vielmehr lösen sich die sich in den Rippentälern entstehenden Wirbel von den Rippenflanken ab und werden von der Drallströmung aufgenommen. Die von den Rippen induzierte Drallenergie bleibt daher weitgehend erhalten und wird nicht in den Rippentälern zum großen Teil aufgezehrt. Dies führt zu einer Verminderung und Vergleichmäßigung der Rohrwandtemperatur und zu einer Vergleichmäßigung der Temperatur über den Rohrquerschnitt.

Die Rippen und die zwischen den Rippen befindlichen Rippentäler können im Querschnitt spiegelsymmetrisch ausgebildet sein und aneinandergrenzen beziehungsweise eine Wellenlinie mit jeweils gleichen Krümmungsradien bilden. Der Flankenwinkel ergibt sich dann zwischen der Tangente im Übergangspunkt Rippental/ Rippe und dem Radius des Verbundrohrs. Dabei sind die Rippen verhältnismäßig flach; so ergibt sich die Rippenhöhe, das heißt der radiale Abstand zwischen den Rippentälern und den Rippenkuppen aus dem Verhältnis der Rippenfläche innerhalb des Hüllkreises und dem freien Querschnitt. Das Verhältnis sollte zwischen 0,06 und 0,01 (vorzugsweise zwischen 0,08 und 0,1) liegen. Damit steigt die Rippenhöhe mit zunehmendem Durchmesser so, daß die Drallströmung in der für die Wirkung des Profils erforderlichen Richtung und Stärke erhalten bleibt.

Anders ausgedrückt, liegt die Verminderung der freien Fläche bezogen auf ein Glattrohr mit gleichem Durchmesser wie der Hüllkreis des Profils bei höchstens 3 %, vorzugsweise bei 1,5 % bis 2,5 %.

In den Rippentälern ergibt sich eine größere Strömungsgeschwindigkeit, die zu einem Selbstreinigungseffekt, daher zu weniger Ablagerungen von Pyrolysekoks führt.

Versuche haben ergeben, daß - unabhängig vom Innendurchmesser der Rohre - insgesamt 6 bis 20, vorzugsweise 8 Rippen ausreichend sind, um das erfindungsgemäße Strömungsbild zu erreichen.

Bei dem erfindungsgemäßen Verbundrohr mit Innenrippen beträgt das Verhältnis der Quotienten der Wärmeübergangskoeffizienten $Q_R / Q_0$ zum Quotienten der Druckverluste $\Delta P_R/\Delta P_0$ im Wasserversuch unter Benutzung und Beachtung der Ähnlichkeitsgesetze und Verwendung der für ein Naphta/Wasserdampf-Gemisch vermittelten Reynoldszahlen, vorzugsweise 1,4 bis 1,5, wobei R ein Rippenrohr und 0 ein Glattrohr kennzeichnet.

Die Überlegenheit des erfindungsgemäßen Verbundrohrs (Profil 3) im Vergleich zu einem Glattrohr (Profil 0) sowie einem Rippenrohr mit achsparallelen Rippen (Profil 1), bei denen der radiale Abstand zwischen den Rippentälern und den Rippenkuppen 4,8 mm beträgt veranschaulichen die Daten der nachfolgenden Tabelle. Die Rippenrohre besaßen sämtlich 8 Rippen sowie denselben Hüllkreis.

| PROFIL | 0 | 1 | 3 |
|---|---|---|---|
| Fluidtemp. bei 9950 mm in der Mitte $T_m$ [°C] | 843,6 | 848,1 | 843,0 |
| Fluidtemp. bei 9950 mm am Rand $T_r$ [°C] | 888,9 | 894 | 874,8 |
| Temperaturspanne bei 9950 mm $\Delta T = T_r - T_m$ [°C] | 45,3 | 45,9 | 31,8 |
| Homogenitätsfaktor zum Glattrohr $H_t$ $H_t = \Delta T_0/ \Delta T_x$ | 1 | 0,9869281 | 1,4245283 |
| Hydr. Durchmesser $d_h$ [m] | 0,0380 | 0,0326 | 0,0358 |

(fortgesetzt)

| PROFIL | 0 | 1 | 3 |
|---|---|---|---|
| bezogener Homogenitätsfaktor bzgl. hydr. $\varnothing$ zum Glattrohr $H_{t\varnothing}$: $H_{t\varnothing} = \Delta T_0 > d_x / \Delta T_x > d_o$ | 1 | 0,8477193 | 1,3420556 |
| Rang H: | 2 | 2 | 1 |

Dabei ist der hydraulische Durchmesser wie folgt definiert:

$$D_{hydr} = 4 \times \text{(freier Querschnitt)} ./. \text{Innenumfang;}$$

er entspricht vorzugsweise dem Innendurchmesser eines vergleichbaren Glattrohrs und ergibt dann einen Homogenitätsfaktor von 1,425.

Das erfindungsgemäße Verbundrohr ergibt im Wasserversuch einen um den Faktor 2,56 höheren Wärmeübergang ($Q_R$) im Vergleich zum Glattrohr bei einem nur um den Faktor 1,76 erhöhten Druckverlust ($\Delta P_R$).

In einer bevorzugten Ausführungsform weist das erste Teilrohr eine Analyse von

| Element | Gew.-% |
|---|---|
| C | 0,1 bis 0,5 |
| Cr | 20 bis 50 |
| Ni | 20 bis 80 |
| Nb | 0 bis 2 |
| Si | 0 bis 3 |
| W | 0 bis 5 |
| andere | 0 bis 1 |
| Fe | Rest |

auf, insbesondere bevorzugt besteht das erste Teilrohr aus einem der DIN EN 10027 Teil 1 Werkstoffe GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, GX55NiCrWZr33-30-04. Diese Werkstoffe haben sich für den Hochtemperatureinsatz bei Verfahren zum thermischen Spalten von Kohlenwasserstoffen als besonders geeignet erwiesen.

In einer bevorzugten Ausführungsform besteht das zweite Teilrohr aus dem gleichen Werkstoff, wie das erste Teilrohr. Zum Einstellen besonderer Eigenschaften kann das zweite Teilrohr jedoch auch aus einem keramischen Werkstoff, einem intermetallischen Werkstoff oder einem ODS-Werkstoff bestehen. Intermetallische Werkstoffe können als in aggressiven Atmosphären inert ausgebildet werden, ODS-Werkstoffe ermöglichen eine gute Zeitstandfestigkeit durch feindispers verteilte Oxide.

Ein nicht erfindungsgemäßes Herstellungsverfahren für ein Verbundrohr sieht vor, ein Pulver in Kontakt mit der Innen- oder Außenoberfläche eines Schleudergußrohrs zu bringen und das Pulver durch Druckbehandlung mittels isostatischem Heißpressen zur Bildung des zweiten Teilrohrs zu verdichten und mit dem Schleudergußrohr zu verbinden, insbesondere metallurgisch zu verbinden. Der Einsatz eines Pulvers zur Herstellung des zweiten Teilrohrs ermöglicht es, das Teilrohr aus Werkstoffen bzw. Werkstoffkombinationen herzustellen, die nicht schleudergießfähig sind oder die nur unter erheblichem Aufwand herstellbar sind (z.B. inerte Atmosphäre). Außerdem besteht die Möglichkeit, Rohre herzustellen, die aufgrund ihrer Geometrie nicht schleudergießbar sind, wie z.B. ein Innerohr mit einer Wandstärke von nur wenigen mm. Dadurch entsteht insbesondere die Möglichkeit, die Außen- oder Innenoberfläche eines Schleudergußrohrs mit bestimmten Werkstoffen an Einsatzgebiete anzupassen, bei denen die Schleudergußwerkstoffe eines besonderen Schutzes, beispielsweise eines Korrosions- oder Aufkokungsschutzes bedürfen.

Das Pulver wird während der Herstellung des Verbundrohrs mittels isostatischem Heißpressen erhitzt. Dies erfolgt gleichzeitig mit der Druckbehandlung. Werden die Druckbehandlung und das Erhitzen des Pulvers gleichzeitig durchgeführt, ergibt sich ein zweites Teilrohr mit hoher Dichte, geringer Porosität und gutem metallurgischen Verbund.

Die Erhitzung des Pulvers kann durch Wärmeübertragung von außen, beispielsweise durch die Erhitzung des Schleudergußrohrs oder durch einen über das Pulver strömenden Gasstrom oder ein mit dem Pulver in Kontakt stehendes Heizelements erfolgen. Die Erhitzung des Pulvers kann jedoch auch induktiv erfolgen.

Das Pulver kann vor der Druckbehandlung vorverdichtet werden. Dies erfolgt insbesondere bevorzugt mittels Rütteln. Zur besseren Handhabung des Pulvers kann es außerhalb des Schleudergußrohrs zu einem Formkörper vorverdichtet werden, beispielsweise zu einem Rohr oder einem Zylinder. Die Vorverdichtung kann soweit erfolgen, daß der Formkörper handhabbar, also beispielsweise selbsttragend wird. Als Formkörper kann das vorverdichtete Pulver leicht in das Schleudergußrohr eingeführt werden.

Die Handhabbarkeit des Pulvers kann ergänzend oder alternativ erhöht werden, wenn das Pulver mit einem Bindemittel gebunden wird, beispielsweise zu einem Formkörper. Das Bindemittel tritt bevorzugt bei der Druckbehandlung, insbesondere bei einer Druckbehandlung mit Erhitzen, aus dem Pulver aus.

Besonders bevorzugt wird zur Herstellung eines Verbundrohrs mit einem in dem ersten Teilrohr angeordneten zweiten Teilrohr ein nicht erfindungsgemäßes Verfahren eingesetzt, bei dem ein Kern in ein Schleudergußrohr eingesetzt wird, ein zwischen der Innenoberfläche des Schleudergußrohrs und dem Kern verbleibender Freiraum mit einem Pulver gefüllt wird, das Schleudergußrohr mit dem Kern und dem Pulver in eine Druckkammer eingebracht wird, die Druckkammer bei gleichzeitiger Erhitzung des Pulvers unter Druck gesetzt wird und nach Abschluß der Druckbehandlung der Kern aus dem so erzeugten Verbundrohr entfernt wird. Das Einbringen des Pulvers in einen zwischen der Innenoberfläche des Schleudergußrohrs und dem Kern verbleibenden Freiraum hat sich für die Handhabung, insbesondere bei vertikal stehendem Schleudergußrohr, als vorteilhaft erwiesen. Abhängig von den räumlichen Gegebenheiten kann ein Einführen des Kerns und/oder das Einfüllen des Pulvers auch bei einem bereits in eine Druckkammer eingebrachten Schleudergußrohr erfolgen.

Vorzugsweise wird ein Kern mit einem zu einem auf der Innenseite des Verbundrohrs zu erzeugenden Rippenprofil inversen Profil in das Schleudergußrohr eingesetzt. Das Verbundrohr erhält somit ein zweites Teilrohr mit einem Innenprofil, das insbesondere bevorzugt bei einem Verfahren zum thermischen Spalten von Kohlenwasserstoffen in Anwesenheit von Dampf eingesetzt werden kann.

Der Kern kann zumindest teilweise mittels Ätzen oder durch mechanische Verfahren aus dem Verbundrohr entfernt werden. Dies ermöglicht ein leichtes Herauslösen des Kerns aus dem hergestellten Verbundrohr, selbst dann, wenn der Kern teilweise eine metallurgische Verbindung mit dem zweiten Teilrohr eingegangen ist.

Ergänzend oder alternativ kann das Pulver auf der dem Kern oder der Form zugewandten Seite mit einem Distanzstoff, beispielsweise einem besonderen Bindemittel versehen sein, der während der Druckbehandlung des Pulvers, insbesondere während des Erhitzens, eine metallurgische Verbindung mit dem Kern bzw. der Form verhindert. Bevorzugt erfolgt dies durch ein Verdampfen des Distanzstoffes an dem Übergang vom Pulver zum Kern bzw. zu der Form.

Zur Herstellung eines Verbundrohrs mit an der Außenseite des Schleudergußrohrs vorgesehenem zweitem Teilrohr wird das Schleudergußrohr gemäß einer bevorzugten Ausführungsform in eine Form eingesetzt, ein zwischen der Außenoberfläche des Schleudergußrohrs und der Form verbleibender Freiraum mit einem Pulver gefüllt, das Schleudergußrohr in eine Druckkammer eingebracht, die Druckkammer bei gleichzeitiger Erhitzung des Pulvers unter Druck gesetzt und nach Abschluß der Druckbehandlung das so mit einem ersten Teilrohr und einem zweiten Teilrohr hergestellte Verbundrohr aus der Form genommen.

Das Pulver in dem Freiraum zwischen dem Kern und dem Schleudergußrohr, bzw. der Form und dem Schleudergußrohr kann durch Rütteln verdichtet werden.

Um die Handhabung eines Schleudergußrohrs mit in einen Freiraum zwischen der Form und dem Schleudergußrohr oder dem Kern und dem Schleudergußrohr gefülltem Pulver zu erhöhen, wird der Freiraum vorzugsweise an einem Ende verschlossen. Dies erlaubt insbesondere eine Handhabung eines vertikal stehenden Rohres, ohne daß das Pulver aus dem Freiraum herausfällt.

Die Druckbehandlung erfolgt insbesondere bei Drücken von mindestens 450 bar, insbesondere 1000 bar oder mehr. Während des Erhitzens wird das Pulver insbesondere bevorzugt auf eine Temperatur von mindestens 450°C, insbesondere von 1000°C oder mehr erhitzt.

Das Verdichten des Pulvers bei der Druckbehandlung kann unter inerter Atmosphäre erfolgen. Hierdurch wird insbesondere eine Oxidation des Pulvers während des Herstellens des zweiten Teilrohrs verhindert. Insbesondere bevorzugt wird die Druckkammer mit einem Inertgas gefüllt.

Eine besonders effiziente Herstellung von erfindungsgemäßen Verbundrohren läßt sich erreichen, wenn mehrere Verbundrohre in einer Druckkammer gemeinsam hergestellt werden.

Bei einem mit wendelförmig verlaufenden Innenrippenrohren herzustellenden Verbundrohr kann die Wendelform erzeugt werden, indem ein Verbundrohr mit geraden Rippen hergestellt wird und die Enden des Verbundrohrs nach dem Herstellen gegeneinander verdreht werden.

Die Wirtschaftlichkeit des thermischen Spaltens von Kohlenwasserstoffen in Röhrenofen mit außen beheizten Rohren kann durch die Verwendung eines Verbundrohrs verbessert werden, da durch die unterschiedlichen Herstellungsarten und Werkstoffe der Teilrohre des Verbundrohrs für die jeweilige Lage des Teilrohrs bevorzugte Eigenschaften eingestellt werden können. Insbesondere bevorzugt wird ein erfindungsgemäßes Verbundrohr verwendet, bei dem das erste Teilrohr ein Schleudergußrohr ist und das zweite Teilrohr durch Druckbehandlung aus einem Pulver erzeugt wurde.

Das erfindungsgemäße Verbundrohr kann insbesondere derart ausgebildet und eingesetzt werden, daß in unmittelbarer Nachbarschaft der Rippen eine Drallströmung erzeugt und mit zunehmendem radialem Abstand von den Rippen in eine Kernzone überwiegend axialer Strömung überführt wird. Der Übergang zwischen der Außenzone mit der Drallströmung und der Kernzone mit der überwiegend axialen Strömung vollzieht sich allmählich, beispielsweise exponentiell.

Bei der erfindungsgemäßen Verwendung nimmt die Drallströmung die sich an den Rippenflanken ablösenden Wirbel auf, so daß es nicht zu einer lokalen Rückführung der Wirbel nach Art einer in sich geschlossenen kreisförmigen Strömung in die Rippentäler kommt. Damit verbunden ist eine Erhöhung der mittleren Verweilzeit von 10 % bis 20 %, beispielsweise 15 %. Dies ist insbesondere dann gewährleistet, wenn die Drallströmung im Bereich der Rippen beziehungsweise die Rippen in einem Winkel von 20° bis 40°, beispielsweise bis 32°, vorzugsweise 22,5° bis 32,5°, bezogen auf die Rohrachse verlaufen.

Bei der erfindungsgemäßen Verwendung wird das über den Rohrumfang zwischen Sonnen- und Schattenseite zwangsläufig unterschiedliche Wärmeangebot in der Rohrwandung und im Rohrinnern ausgeglichen und dabei die Wärme rasch nach innen zur Kernzone abgeführt. Damit verbunden ist eine Verringerung der Gefahr einer lokalen Überhitzung des Prozeßgases an der Rohrwand und der dadurch verursachten Entstehung von Pyrolysekoks. Außerdem ist die thermische Beanspruchung des Rohrwerkstoffs infolge des Temperaturausgleichs zwischen Sonnen- und Schattenseite geringer, was zu einer Verlängerung der Lebensdauer führt. Schließlich kommt es bei der erfindungsgemäßen Verwendung auch zu einer Vergleichmäßigung der Temperatur über den Rohrquerschnitt mit der Folge einer besseren Äthylenausbeute beziehungsweise Spaltschärfe. Der Grund hierfür ist die Umkehrbarkeit der Spaltreaktion, die ohne den erfindungsgemäßen radialen Temperaturausgleich im Rohrinnern dazu führt, daß es an der heißen Rohrwand zu einem Cracken und in der Rohrmitte zu einer Rekombination kommt.

Des weiteren bildet sich beim Glattrohr und verstärkt bei Rippenprofilen mit mehr als um 10 % vergrößertem Innenumfang eine für turbulente Strömungen charakteristische Schicht laminarer Strömung mit stark reduziertem Wärmeübergang. Sie führt zu verstärkter Bildung von Pyrolysekoks mit ebenfalls schlechter Wärmeleitfähigkeit. Beide Schichten zusammen erfordern ein höherer Wärmeeinbringen beziehungsweise eine höhere Brennerleistung. Dies erhöht die Rohrwandtemperatur (TMT) und verkürzt demzufolge die Lebensdauer.

Die Drallströmung verringert die Laminarschicht ganz erheblich; sie ist zudem mit einem zum Rohrzentrum gerichteten Geschwindigkeitsvektor verbunden, der die Verweilzeit von Crack-Radikalen beziehungsweise Spaltprodukten an der heißen Rohrwand sowie deren chemische und katalytische Umsetzung zu Pyrolysekoks verringert. Zusätzlich werden die bei Innenprofilrohren mit hohen Rippen nicht unerheblichen Temperaturunterschiede zwischen Rippentälern und Rippen durch die erfindungsgemäße Drallströmung ausgeglichen. Damit vergrößert sich der zeitliche Abstand zwischen zwei notwendigen Entkokungen. Eine möglichst kurze Verweilzeit der zur Verkokung neigenden Spaltprodukte ist bei mit Innenrippen versehenen Crackrohren besser. Besonders wichtig, weil sich zwischen den Rippenkuppen und dem Grund der Rippentäler ohne die erfindungsgemäße Drallströmung ein nicht unerheblicher Temperaturunterschied ergibt.

Vorzugsweise ist bei der erfindungsgemäßen Verwendung die Umfangsgeschwindigkeit der Gasströmung in den Rippentälern größer als an den Rippenkuppen.

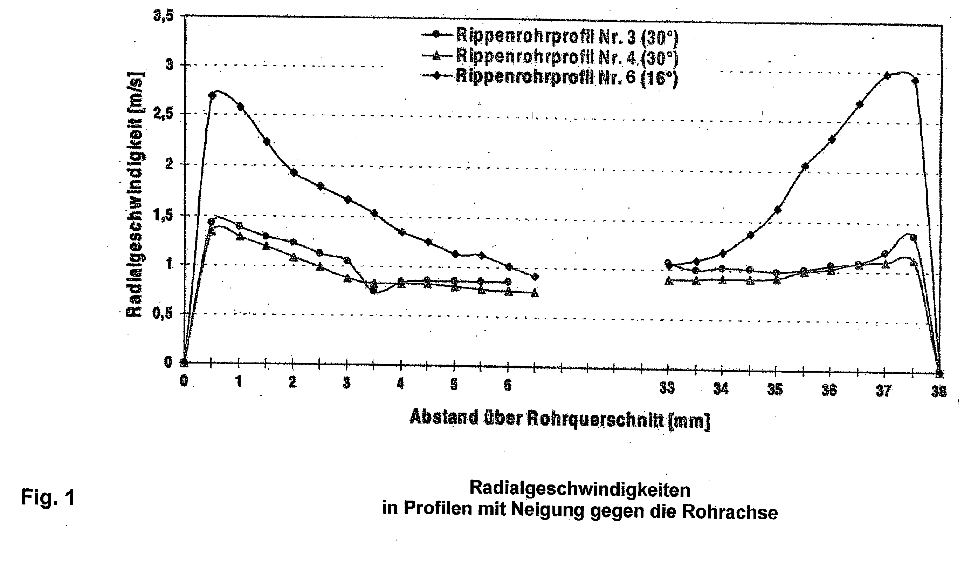

Das Diagramm der Fig. 1 enthält eine Gegenüberstellung der Drall- bzw. Umfangsgeschwindigkeiten bei einem erfindungsgemäßen Rippenrohr (Profil 3) mit 8 Rippen und einer Rippensteigung von 30° und zweier Vergleichsrohre (Profile 4 und 6), jeweils mit einer Rippensteigung von 16° und 3 beziehungsweise 8 Rippen über den Rohrquerschnitt. Der Kurvenverlauf zeigt deutlich die wesentlich höhere Umfangsgeschwindigkeit in der Randzone des erfindungsgemäßen Verbundrohrs von maximal etwa 2,75 beziehungsweise 3 m/s im Vergleich zu der Maximalgeschwindigkeit von nur etwa 1,5 m/s in den Randzonen der beiden Vergleichsrohre.

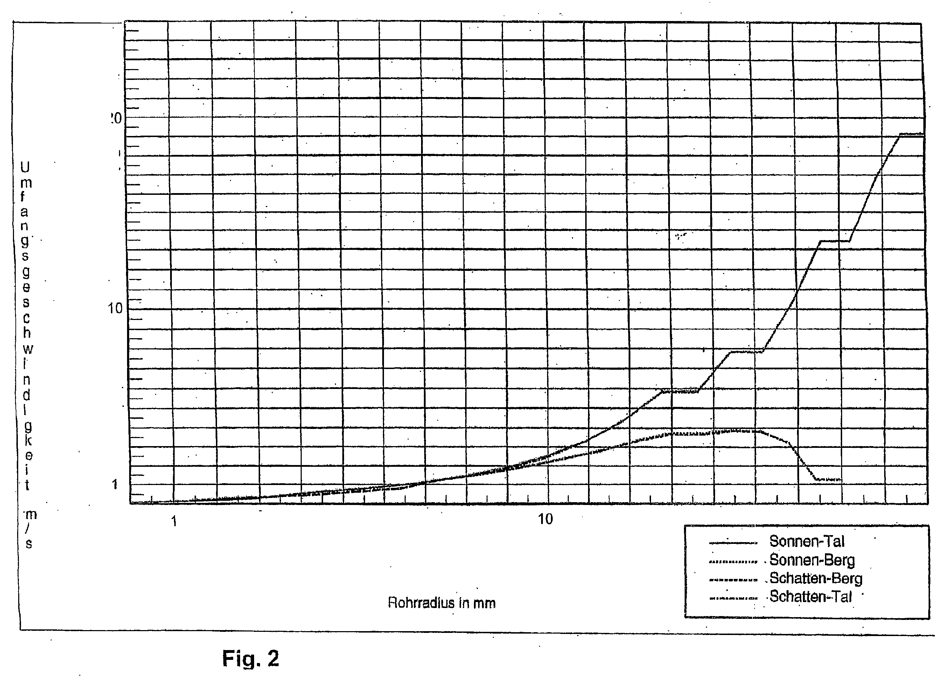

Das Diagramm der Fig. 2 zeigt die Verteilung der Umfangsgeschwindigkeit über den Rohrradius für das Profil 3 eines erfindungsgemäßen Verbundrohrs. Die beiden - zusammenfallenden - oberen Kurven wurden jeweils auf einem Radius gemessen, der durch ein Rippental auf der Sonnen- beziehungsweise auf der Schattenseite verlief, während die beiden unteren Kurven jeweils längs der Radien gemessen wurden, die durch die Rippenkuppen (Berg) auf der Sonnen- beziehungsweise Schattenseite verliefen.

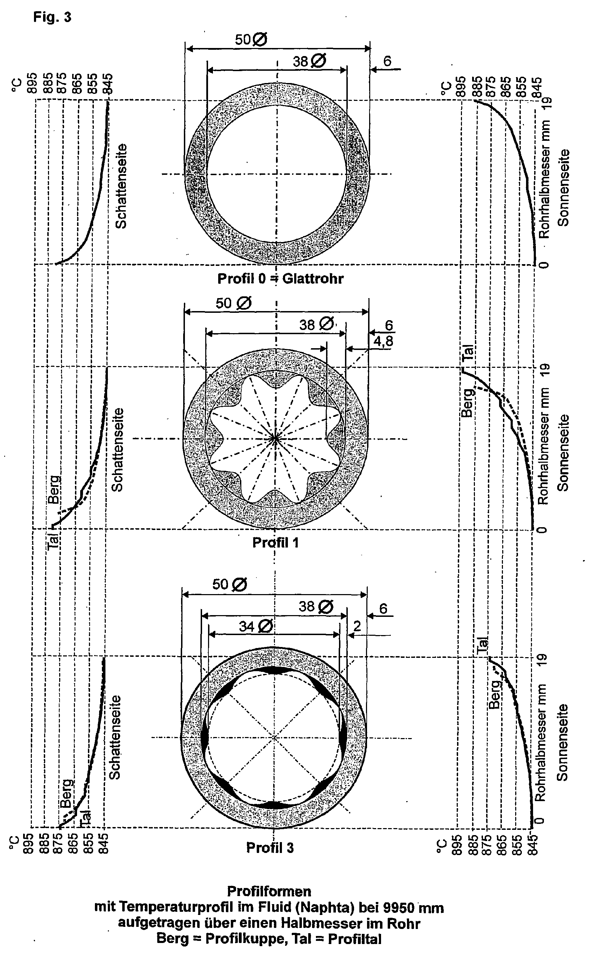

In Fig. 3 sind drei Versuchsrohre mit ihren Daten im Querschnitt dargestellt, darunter auch das erfindungsgemäße Profil 3. Die Diagramme geben jeweils den Temperaturverlauf über den Rohrhalbmesser (Radius) auf der Schatten- und der Sonnenseite wieder. Ein Vergleich der Diagramme zeigt die geringere Temperaturdifferenz zwischen Rohrwand und -zentrum sowie die geringere Rohrwandtemperatur bei dem erfindungsgemäßen Profil 3.

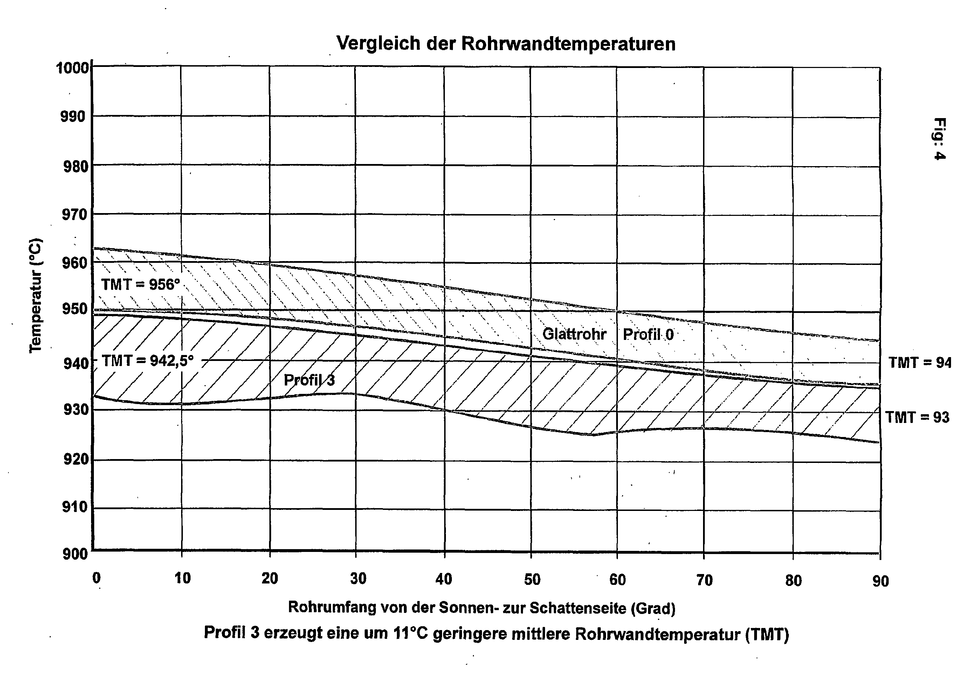

Die bei der erfindungsgemäßen Verwendung des Verbundrohrs erzeugte Drallströmung gewährleistet, daß die Schwankung der Innenwandtemperatur über den Rohrumfang, das heißt zwischen Sonnen- und Schattenseite unter 12° C liegt, obgleich die üblicherweise in parallelen Reihen angeordneten Rohrschlangen eines Röhrenofens mit Hilfe von Seitenwandbrennern lediglich auf einander gegenüberliegenden Seiten beheizt beziehungsweise mit Verbrennungsgasen beaufschlagt werden und die Rohre somit jeweils eine den Brennern zugekehrte Sonnenseite und eine um 90° dazu versetzte Schattenseite besitzen. Die mittlere Rohrwandtemperatur, das heißt die Differenz der Rohrwandtemperatur zwischen Sonnen- und Schattenseite führt zu inneren Spannungen und bestimmt daher die Lebensdauer der Rohre. So ergibt die aus dem Diagramm der Fig. 4 ersichtliche Verringerung der mittleren Rohrwandtemperatur eines erfindungsgemäßen Verbundrohrs mit acht Rippen einer Steigung von 30°, einem Rohrinnendurchmesser von 38,8 mm und einem Rohraußendurchmesser von 50,8 mm, somit einer Höhendifferenz zwischen Rippentälern und Rippenkuppen von 2 mm von 11° im Vergleich zu einem durchmessergleichem Glattrohr, bezogen auf eine mittlere Lebensdauer von 5 Jahren, bei einer Betriebstemperatur von 1050 °C eine rechnerische Lebensdauererhöhung auf etwa 8 Jahre.

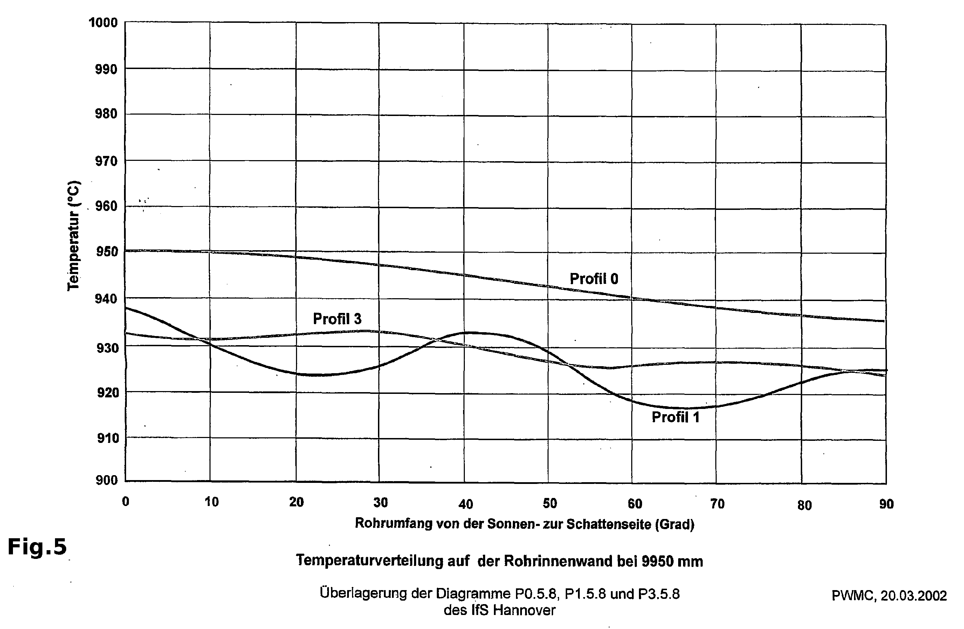

Die Temperaturverteilung zwischen Sonnen- und Schattenseite für die drei Profile der Fig.3 ergibt sich aus dem Diagramm der Fig. 5. Bemerkenswert ist dabei das niedrigere Temperaturniveau der Tempartur-Kurve für das Profil 3 im Vergleich zum Glattrohr (Profil 0) und die erheblich geringere Schwankungsbreite der Profil 3-Kurve im Vergleich zu der Profil 1-Kurve.

Eine besonders günstige Temperaturverteilung stellt sich ein, wenn die Isothermen in der Kernzone kreisförmig verlaufen und nur in der Drallzone dem Innenprofil des Verbundrohrs folgen.

Eine gleichmäßigere Verteilung der Temperatur über den Querschnitt ergibt sich insbesondere, wenn sich die Drallströmung um 1,8 bis 20 m/s je Meter Rohrlänge erhöht und wenn sie 7 % bis 8 % des freien Querschnitts erfaßt, gerechnet ab Eintritt es Gasgemisches in das Profilrohr.

Bei der erfindungsgemäßen Verwendung des Verbundrohrs sollte im Hinblick auf eine hohe Äthylenausbeute bei vergleichsweise kurzer Rohrlänge der Homogenitätsfaktor der Temperatur über den Querschnitt und der auf den hydraulischen Durchmesser bezogene Homogenitätsfaktor der Temperatur im Verhältnis zu den Homogenitätsfaktoren eines Glattrohrs über 1 liegen. Dabei sind die Homogenitätsfaktoren wie folgt definiert:

$$H_{t\varnothing}: H_{t\varnothing} = \Delta T_0 > d_x / \Delta T_x > d_o$$

Das erfindungsgemäße Verbundrohr läßt sich besonders gut in allen Hochtemperaturprozessen einsetzen, als solchen, bei denen das Rohr, insbesondere an der Außenseite, hohen Temperaturen von beispielsweise 800 bis 1000°C ausgesetzt wird. Insbesondere kann das erfindungsgemäße Verbundrohr bei der Farbpigmentherstellung, in Drehrohröfen, beispielsweise beim Verbrennen von Substanzen aus der chemischen Industrie oder Pharmaindustrie oder in Müllverbrennungsanlagen eingesetzt werden.

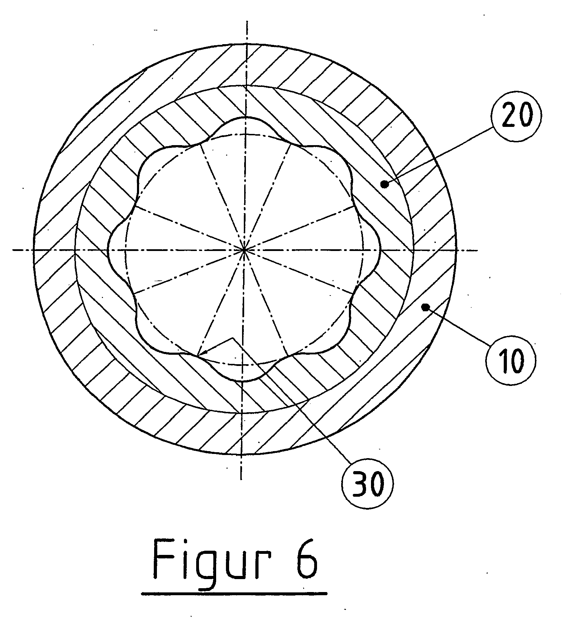

In der Fig. 6 ist ein Ausführungsbeispiel des erfindungsgemäßen Verbundrohrs dargestellt. Dies weist ein erstes Teilrohr 10 und ein durch Druckbehandlung aus einem Pulver erzeugtes zweites Teilrohr 20 mit Rippen 30 auf.

**Patentansprüche**

1. Verwendung eines Verbundrohrs mit einem ersten Teilrohr (10) und einem zweiten Teilrohr (20), bei dem

    - das eine Teilrohr in dem anderen Teilrohr angeordnet ist,
    - das erste Teilrohr (10) ein Schleudergußrohr ist und
    - das zweite Teilrohr (20) durch Druckbehandlung mittels isostatischem Heißpressen aus einem Pulver erzeugt wurde.

    zum thermischen Spalten von Kohlenwasserstoffen in Anwesenheit von Dampf.

2. Verwendung nach Anspruch 1, **dadurch gekennzeichnet, daß** das erste Teilrohr (10) metallurgisch mit dem anderen Teilrohrs (20) verbunden ist.

3. Verwendung nach Anspruch 1 oder 2, **dadurch gekennzeichnet, daß** das zweite Teilrohr (20) ein Profil aufweist.

4. Verwendung nach einem der Ansprüche 1 bis 3, **dadurch gekennzeichnet, daß** das zweite Teilrohr (20) in dem ersten Teilrohrs (10) angeordnet ist.

5. Verwendung nach Anspruch 3 und 4, **dadurch gekennzeichnet, daß** das zweite Teilrohr (20) mindestens eine Innenrippe (30) aufweist.

**6.** Verwendung nach Anspruch 5, **dadurch gekennzeichnet, daß** die Innenrippe wendelförmig verläuft.

**7.** Verwendung nach Anspruch 5 oder 6, **dadurch gekennzeichnet, daß** der Flankenwinkel der Rippe 16 bis 20° beträgt.

**8.** Verwendung nach einem der Ansprüche 5 bis 7, **dadurch gekennzeichnet, daß** der Steigungswinkel der Rippe 20° bis 40° beträgt.

**9.** Verwendung nach einem der Ansprüche 5 bis 8, **dadurch gekennzeichnet, daß** mehrere Rippen und die zwischen den Rippen befindlichen Rippentäler im Querschnitt spiegelsymmetrisch ausgebildet sind.

**10.** Verwendung nach einem der Ansprüche 5 bis 9, **dadurch gekennzeichnet, daß** die Rippenkuppen und die Rippentäler mehrerer Rippen jeweils aneinander grenzen.

**11.** Verwendung nach einem der Ansprüche 5 bis 10, **dadurch gekennzeichnet, daß** die Rippen und die Rippentäler mehrerer Rippen denselben Krümmungsradius besitzen.

**12.** Verwendung nach einem der Ansprüche 5 bis 11, **gekennzeichnet durch** insgesamt sechs bis zwanzig Rippen.

**13.** Verwendung nach einem der Ansprüche 5 bis 12, **dadurch gekennzeichnet, daß** das Verhältnis der Rippenfläche innerhalb des Profil-Hüllkreises zum freien Querschnitt des Profils unter 0,06 bis 0,1 liegt.

**14.** Verwendung nach einem der Ansprüche 5 bis 13, **dadurch gekennzeichnet, daß** das Verhältnis der Quotienten der Wärmeübergangskoeffizienten $Q_R/Q_0$ zum Quotienten der Druckverluste $\Delta P_R/\Delta P_0$ im Wasserversuch 1,4 bis 1,5 beträgt, wobei R ein Verbundrohr mit Rippen und 0 ein Glattrohr kennzeichnet.

**15.** Verwendung nach einem der Ansprüche 5 bis 14, **dadurch gekennzeichnet, daß** der hydraulische Durchmesser dem Innenrohrdurchmesser eines vergleichbaren Glattrohrs entspricht.

**16.** Verwendung nach einem der Ansprüche 1 bis 15, **dadurch gekennzeichnet, daß** das erste Teilrohr (10) aus einem Werkstoff mit der Analyse

| Element | Gew.-% |
|---------|--------|
| C | 0,1 bis 0,5 |
| Cr | 20 bis 50 |
| Ni | 20 bis 80 |
| Nb | 0 bis 2 |
| Si | 0 bis 3 |
| W | 0 bis 5 |
| andere | 0 bis 1 |
| Fe | Rest |

insbesondere aus einem der DIN EN 10027 Teil 1 Werkstoffe GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GXI3NiCrNb45-35, GX13NiCrNb37-25, GX55NiCrWZr33-30-04 besteht.

**17.** Verwendung nach einem der Ansprüche 1 bis 16, **dadurch gekennzeichnet, daß** das zweite Teilrohr aus dem gleichen Werkstoff wie das erste Teilrohr und/oder einem keramischen, intermetallischen oder ODS-Werkstoff hergestellt ist.

**18.** Verwendung nach einem der Ansprüche 1 bis 17 zum thermischen Spalten von Kohlenwasserstoffen in Anwesenheit von Dampf, bei dem das Einsatzgemisch durch außenbeheizte Rohre mit wendelförmigen Innenrippen geführt wird, **dadurch gekennzeichnet, daß** in unmittelbarer Nachbarschaft der Rippen eine Drallströmung erzeugt und mit zunehmendem radialem Abstand von den Rippen in eine Kernzone mit überwiegend axialer Strömung überführt wird.

19. Verwendung nach Anspruch 18, **dadurch gekennzeichnet, daß** die Drallströmung sich an den Rippenflanken ablösende Wirbel aufnimmt.

20. Verwendung nach Anspruch 18 oder 19, **dadurch gekennzeichnet, daß** die Umfangsgeschwindigkeit der Gasströmung in den Rippentälern größer als an den Rippenkuppen ist.

21. Verwendung nach einem der Ansprüche 18 bis 20, **dadurch gekennzeichnet, daß** die Drallströmung an den Rippen in einem Winkel 20° bis 40°, vorzugsweise von 22,5 bis 32,5 °, bezogen auf die Rohrachse, verläuft.

22. Verwendung nach einem der Ansprüche 18 bis 21, **dadurch gekennzeichnet, daß** die Schwankung der Innenwandtemperatur über den Rohrumfang unter 12°C liegt.

23. Verwendung nach einem der Ansprüche 9 bis 22, **dadurch gekennzeichnet, daß** die Isothermen in der Kernzone kreisförmig verlaufen.

24. Verwendung nach einem der Ansprüche 9 bis 23, **dadurch gekennzeichnet, daß** sich die Geschwindigkeit der Drallströmung um 1,8 bis 2,0 m/s je Meter Rohrlänge erhöht.

25. Verwendung nach einem der Ansprüche 9 bis 24, **dadurch gekennzeichnet, daß** die Geschwindigkeit der Drallströmung je Meter Rohrlänge 7% bis 8% des freien Querschnitts erfaßt.

26. Verwendung nach einem der Ansprüche 9 bis 25, **dadurch gekennzeichnet, daß** der Homogenitätsfaktor der Temperatur über den Querschnitt und der auf den hydraulischen Durchmesser bezogene Homogenitätsfaktor der Temperatur im Verhältnis zu den Homogenitätsfaktoren eines Glattrohrs über 1 liegt.

**Claims**

1. Use of a composite pipe with a first part pipe (10) and a second part pipe (20), wherein:

   - the one part pipe is arranged in the other part pipe,
   - the first part pipe (10) is a spun iron pipe and
   - the second part pipe (20) was produced from a powder by pressure treatment by means of isostatic hot pressing

   for thermally splitting hydrocarbons in the presence of steam.

2. Use according to Claim 1, **characterised in that** the first part pipe (10) is metallurgically connected to the other part pipe (20).

3. Use according to Claim 1 or 2, **characterised in that** the second part pipe (20) has a profile.

4. Use according to any one of Claims 1 to 3, **characterised in that** the second part pipe (20) is arranged in the first part pipe (10).

5. Use according to Claims 3 and 4, **characterised in that** the second part pipe (20) has at least one interior rib (30).

6. Use according to Claim 5, **characterised in that** the interior rib runs in a spiral shape.

7. Use according to Claim 5 or 6, **characterised in that** the flank angle of the rib amounts to 16 to 20°.

8. Use according to any one of Claims 5 to 7, **characterised in that** the rising angle of the rib amounts to 20° to 40°.

9. Use according to any one of Claims 5 to 8, **characterised in that** a plurality of ribs and the rib valleys located between the ribs are designed to be mirror-symmetrical in cross-section.

**10.** Use according to any one of Claims 5 to 9, **characterised in that** the rib cups and the rib valleys of a plurality of ribs are in each case bordering on one another.

**11.** Use according to any one of Claims 5 to 10, **characterised in that** the ribs and the rib valleys of a plurality of ribs possess the same curvature radius.

**12.** Use according to any one of Claims 5 to 11, **characterised by** a total of six to twenty ribs.

**13.** Use according to any one of Claims 5 to 12, **characterised in that** the ratio of the rib surface inside the profile sleeve circle to the free cross-section of the profile is less than 0.06 to 0.1.

**14.** Use according to any one of Claims 5 to 13, **characterised in that** the ratio of the quotients of the heat transfer coefficients $Q_R/Q_0$ to the quotients of the pressure losses $\Delta P_R/\Delta P_0$ in the water test amounts to 1.4 to 1.5, wherein R designates a composite pipe with ribs and 0 a smooth pipe.

**15.** Use according to any one of Claims 5 to 14, **characterised in that** the hydraulic diameter corresponds to the inner pipe diameter of a comparable smooth pipe.

**16.** Use according to any one of Claims 1 to 15, **characterised in that** the first part pipe (10) consists of a material with the analysis:

| Element | % by weight |
|---------|-------------|
| C | 0.1 to 0.5 |
| Cr | 20 to 50 |
| Ni | 20 to 80 |
| Nb | 0 to 2 |
| Si | 0 to 3 |
| W | 0 to 5 |
| Others | 0 to 1 |
| Fe | Remainder, |

in particular from one of the materials from DIN EN 10027 Part 1, GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, GX55NiCrWZr33-30-04.

**17.** Use according to any one of Claims 1 to 16, **characterised in that** the second part pipe is manufactured from the same material as the first part pipe and/or from a ceramic, inter-metallic or ODS material.

**18.** Use according to any one of Claims 1 to 17 for thermally splitting hydrocarbons in the presence of steam, in which the mixture used is conducted though externally heated pipes with spiral inner ribs, **characterised in that** a helical-type flow is produced in the immediate vicinity of the ribs and is conveyed, with increasing radial distance from the ribs into a core zone with a predominantly axial flow.

**19.** Use according to Claim 18, **characterised in that** the helical-type flow takes up any swirls or eddies initiated at the rib flanks.

**20.** Use according to Claim 18 or 19, **characterised in that** the circumferential velocity of the gas flow in the rib valleys is greater than at the rib cups.

**21.** Use according to any one of Claims 18 to 20, **characterised in that** the helical-type flow at the ribs runs at an angle of 20° to 40°, preferably from 22.5 to 32.5° related to the axis of the pipe.

**22.** Use according to any one of Claims 18 to 21, **characterised in that** the fluctuation of the inner wall temperature over the circumference of the pipe is below 12°C.

**23.** Use according to any one of Claims 9 to 22, **characterised in that** the isotherms in the core zone run in circular fashion.

**24.** Use according to any one of Claims 9 to 23, **characterised in that** the velocity of the helical-type flow increases by 1.8 to 2.0 m/s per metre of pipe length.

**25.** Use according to any one of Claims 9 to 24, **characterised in that** the velocity of the helical-type flow per metre of pipe length accounts for 7% to 8% of the free cross-section.

**26.** Use according to any one of Claims 9 to 25, **characterised in that** the homogeneity factor of the temperature over the cross-section and the homogeneity factor of the temperature related to the hydraulic diameter in relation to the homogeneity factor of a smooth pipe is greater than 1.

**Revendications**

**1.** Utilisation d'un tube composite comprenant un premier tube partiel (10) et un deuxième tube partiel (20), dans lequel

- un tube partiel est disposé dans l'autre tube partiel,
- le premier tube partiel (10) est un tube en fonte centrifugée et
- le deuxième tube partiel (20) a été produit par traitement sous pression au moyen d'un pressage isostatique à chaud à partir d'une poudre,

pour le craquage thermique d'hydrocarbures en présence de vapeur.

**2.** Utilisation selon la revendication 1, **caractérisée en ce que** le premier tube partiel (10) est lié métallurgiquement avec l'autre tube partiel (20).

**3.** Utilisation selon la revendication 1 ou 2, **caractérisée en ce que** le deuxième tube partiel (20) présente un profil.

**4.** Utilisation selon l'une des revendications 1 à 3, **caractérisée en ce que** le deuxième tube partiel (20) est disposé dans le premier tube partiel (10).

**5.** Utilisation selon la revendication 3 et 4, **caractérisée en ce que** le deuxième tube partiel (20) présente au moins une nervure interne (30).

**6.** Utilisation selon la revendication 5, **caractérisée en ce que** la nervure interne s'étend en hélice.

**7.** Utilisation selon la revendication 5 ou 6, **caractérisée en ce que** l'angle de flanc de la nervure est compris entre 16 et 20°.

**8.** Utilisation selon l'une des revendications 5 à 7, **caractérisée en ce que** l'angle d'inclinaison de la nervure est compris entre 20 et 40°.

**9.** Utilisation selon l'une des revendications 5 à 8, **caractérisée en ce que** plusieurs nervures et les creux de nervures situés entre les nervures sont configurés symétriquement en section.

**10.** Utilisation selon l'une des revendications 5 à 9, **caractérisée en ce que** les sommets de nervures et les creux de nervures de plusieurs nervures sont contigus.

**11.** Utilisation selon l'une des revendications 5 à 10, **caractérisée en ce que** les nervures et les creux de nervures de plusieurs nervures possèdent le même rayon de courbure.

**12.** Utilisation selon l'une des revendications 5 à 11, **caractérisée par** un total de six à vingt nervures.

**13.** Utilisation selon l'une des revendications 5 à 12, **caractérisée en ce que** le rapport de la surface des nervures à l'intérieur du cercle enveloppant du profil avec la section libre du profil est inférieur à 0,06 à 0,1.

**14.** Utilisation selon l'une des revendications 5 à 13, **caractérisée en ce que** le rapport des quotients des coefficients de transfert de chaleur $Q_R/Q_0$ avec les quotients des pertes de pression $\Delta P_R/\Delta P_0$ dans l'essai à l'eau est de 1,4 à 1,5, R désignant un tube composite avec des nervures et 0 un tube lisse.

**15.** Utilisation selon l'une des revendications 5 à 14, **caractérisée en ce que** le diamètre hydraulique correspond au diamètre tubulaire intérieur d'un tube lisse comparable.

**16.** Utilisation selon l'une des revendications 1 à 15, **caractérisée en ce que** le premier tube partiel (10) est composé d'un matériau d'analyse

| Elément | % en poids |
|---------|------------|
| C | 0,1 à 0,5 |
| Cr | 20 à 50 |
| Ni | 20 à 80 |
| Nb | 0 à 2 |
| Si | 0 à 3 |
| W | 0 à 5 |
| autres | 0 à 1 |
| Fe | reste |

en particulier d'un matériau selon la norme DIN EN 10027 Partie 1 Matériaux GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, GX55NiCrWZr33-30-04.

**17.** Utilisation selon l'une des revendications 1 à 16, **caractérisée en ce que** le deuxième tube partiel est réalisé dans le même matériau que le premier tube partiel et/ou dans un matériau céramique, intermétallique ou ODS.

**18.** Utilisation selon l'une des revendications 1 à 17 pour le craquage thermique d'hydrocarbures en présence de vapeur, dans lequel le mélange de charge est guidé à travers des tubes à chauffage extérieur avec des nervures intérieures en hélice, **caractérisée en ce qu'**un écoulement turbulent est généré au voisinage immédiat des nervures et transformé, à mesure que la distance radiale aux nervures augmente, en une zone centrale à écoulement majoritairement axial.

**19.** Utilisation selon la revendication 18, **caractérisée en ce que** l'écoulement turbulent capte des tourbillons qui se détachent des flancs de nervures.

**20.** Utilisation selon la revendication 18 ou 19, **caractérisée en ce que** la vitesse périphérique de l'écoulement gazeux dans les creux de nervures est supérieure à celle au niveau des sommets de nervures.

**21.** Utilisation selon l'une des revendications 18 à 20, **caractérisée en ce que** l'écoulement turbulent passe au niveau des nervures avec un angle de 20° à 40°, de préférence de 22,5 à 32,5°, par rapport à l'axe du tube.

**22.** Utilisation selon l'une des revendications 18 à 21, **caractérisée en ce que** la variation de la température de paroi intérieure sur le pourtour du tube est inférieure à 12 °C.

**23.** Utilisation selon l'une des revendications 9 à 22, **caractérisée en ce que** les isothermes sont circulaires dans la zone centrale.

**24.** Utilisation selon l'une des revendications 9 à 23, **caractérisée en ce que** la vitesse de l'écoulement turbulent augmente de 1,8 à 2,0 m/s par mètre de longueur de tube.

**25.** Utilisation selon l'une des revendications 9 à 24, **caractérisée en ce que** la vitesse de l'écoulement turbulent couvre 7 % à 8 % de la section libre par mètre de longueur de tube.

26. Utilisation selon l'une des revendications 9 à 25, **caractérisée en ce que** les rapports du facteur d'homogénéité de la température en fonction de la section et du facteur d'homogénéité de la température en fonction du diamètre hydraulique avec les facteurs d'homogénéité d'un tube lisse sont supérieurs à 1.

Radialgeschwindigkeiten
in Profilen mit Neigung gegen die Rohrachse

Abstand über Rohrquerschnitt [mm]

Radialgeschwindigkeit [m/s]

— Rippenrohrprofil Nr. 3 (30°)
— Rippenrohrprofil Nr. 4 (30°)
— Rippenrohrprofil Nr. 6 (16°)

Fig. 1

15

Fig. 2

**Fig. 3**

Profil 0 = Glattrohr

Profil 1

Profil 3

**Profilformen**
**mit Temperaturprofil im Fluid (Naphta) bei 9950 mm**
**aufgetragen über einen Halbmesser im Rohr**
**Berg = Profilkuppe, Tal = Profiltal**

**Fig: 4**

Vergleich der Rohrwandtemperaturen

TMT = 94

TMT = 93

TMT = 956°

TMT = 942,5°

Glattrohr    Profil 0

Profil 3

Temperatur (°C)

1000
990
980
970
960
950
940
930
920
910
900

0    10    20    30    40    50    60    70    80    90

Rohrumfang von der Sonnen- zur Schattenseite (Grad)

Profil 3 erzeugt eine um 11°C geringere mittlere Rohrwandtemperatur (TMT)

EP 1 802 410 B1

Fig.5

Temperaturverteilung auf der Rohrinnenwand bei 9950 mm

Überlagerung der Diagramme P0.5.8, P1.5.8 und P3.5.8
des IfS Hannover

PWMC, 20.03.2002

Profil 0

Profil 1

Profil 3

Rohrumfang von der Sonnen- zur Schattenseite (Grad)

Temperatur (°C)

19

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 969796 A
- EP 0980729 B1
- US 4510988 A
- US 6406800 B1
- JP 08109405 B
- US 5069866 A